Europäisches Patentamt

European Patent Office

Office européen des brevets

(19)

(11) Veröffentlichungsnummer: **0 104 142**
A2

(12) # EUROPÄISCHE PATENTANMELDUNG

(21) Anmeldenummer: 83810390.1

(22) Anmeldetag: 29.08.83

(51) Int. Cl.³: **B 65 B 5/10**
B 65 B 57/10, B 65 G 21/14
B 65 G 43/08

(30) Priorität: 16.09.82 CH 5489/82

(43) Veröffentlichungstag der Anmeldung:
28.03.84 Patentblatt 84/13

(84) Benannte Vertragsstaaten:
AT BE CH DE FR GB IT LI LU NL SE

(71) Anmelder: Hollymatic AG Ingenbohl
Wylenstrasse 25
CH-6440 Brunnen(CH)

(72) Erfinder: Bollinger, Rudolf
Wylenstrasse 25
CH-6440 Brunnen(CH)

(74) Vertreter: White, William et al,
c/o Patentanwaltsbureau ISLER & SCHMID
Walchestrasse 23
CH-8006 Zürich(CH)

(54) Vorrichtung zum ortsgenauen Ablegen von Gegenständen.

(57) Bei plastisch verformbaren Gegenständen, wie Pasteten aus gemahlenem Fleisch, wird verlangt, dass diese bei der Behandlung ihre ursprüngliche Form beibehalten. Zum Ablegen der Gegenstände in Servierschalen müssen dieselben genau bis zum Abgabeort geführt und in derselben Lage abgelegt werden. Dies wird durch schrittweises Zurückziehen des stromabwärtigen Endes (30b) eines Förderbandes (30) bewirkt. Das Förderband (30) ist am stromabwärtigen Ende (30b) über eine Umlenkwalze (11) an einem Schlitten (10) geführt. Eine zweite Walze (12) am Schlitten bildet eine Schleife aus dem verkürzten oberen Trum des Förderbandes (30). Ein Bremsmotor (20) erlaubt ein rasches Anfahren des Schlittens (10) und ein ortsgenaues sofortiges Anhalten. Dadurch fallen die Gegenstände infolge des Beharrungsvermögens infolge des raschen Zurückziehens des stromabwärtigen Endes senkrecht nach unten auf eine Unterlage.

Fig. 1

EP 0 104 142 A2

Vorrichtung zum ortsgenauen Ablegen von Gegenständen

Die vorliegende Erfindung betrifft eine Vorrichtung zum ortsgenauen Ablegen von Gegenständen gemäss dem Oberbegriff des unabhängigen Patentanspruchs 1.

In der Verpackungsindustrie ist es bekannt, Gegenstände mittels Saugköpfen von einem Strom zugeführter Gegenstände abzunehmen und genau ausgerichtet zu schichten oder anderweitig abzulegen. Dies geschieht gemäss der CH-A 500 094 bei Beuteln, die als zusammenhängendes Band zugeführt werden dadurch, dass die Beutel in der Gruppierstation abgetrennt werden und durch periodisch bewegte Saugköpfe überführt und an der Aufnahmestelle von den Saugköpfen abgestreift werden. Da die zu transportierenden Gegenstände eine ansaugbare Oberfläche, die Beutelwand, aufweisen, lassen sich solche Beutel sehr genau von einer ersten Stelle an eine zweite Stelle überführen.

Bei plastisch verformbaren Gegenständen, wie Teigstücke oder gar Pasteten aus gemahlenem Fleisch oder dgl. muss deshalb eine solche Vorrichtung versagen. Dementsprechend wurde in der CH-A 622 754 für ein gleichmässiges Absetzen von auf einem Transportband in Abständen zugeführten Teigstücken vorgeschlagen, die Teigstücke durch Zurückziehen des stromabwärtigen Endes eines Transportbandes auf eine darunter befindliche Unterlage abzusetzen. Damit die Einstellarbeit bei unterschiedlichen Gegenständen vereinfacht wird, ist vorgesehen, das Ankommen der Gegenstände am stromabwärtigen Ende festzustellen und damit einen Antriebsmotor für das Zurückziehen dieses Endes zu starten und den Motor erst nach einer einstellbaren Zeit wieder abzuschalten. Für das Zurückversetzen des stromabwärtigen Endes in die Anfangsstellung wird die Drehrichtung des Motors geändert.

Bei Teigstücken ist die Lage derselben auf der Unterlage offenbar nicht wichtig und es kann in Kauf genommen werden, dass die Teigstücke gekippt werden. Bei Pasteten aus gemahlenem Fleisch reagiert hingegen der Endabnehmer sehr empfindlich auf Abweichungen bezüglich Dicke und Form der Peripherie, weil es bekannt ist, dass auch Verformungen beim Backen bzw. beim Garen durch unterschiedliche Mengen Fleisch oder unterschiedliche Fleischarten entstehen könnten. Deshalb muss beim Ablegen solcher Pasteten ausser der ortgenauen Ablage auch auf die Formtreue geachtet werden.

Erfindungsgemäss wird dies durch eine Vorrichtung mit den Merkmalen im kennzeichnenden Teil des unabhängigen Patentanspruchs erreicht. Besonders vorteilhafte Ausführungsformen sind in den abhängigen Patentansprüchen aufgeführt.

Ausführungsbeispiele der Erfindung werden nachfolgend anhand der Zeichnung erläutert. Es zeigen:

Fig. 1   ein Prinzipschema der Vorrichtung,

Fig. 2   eine perspektivische Ansicht einer ersten Ausführungsform der Vorrichtung,

Fig. 3   einen zur Vorrichtung nach Fig. 2 zugehörigen Grundriss der Uebergabestelle in fünf unterschiedlichen Phasen,

Fig. 4   eine perspektivische Ansicht einer zweiten Ausführungsform der Vorrichtung mit zwei Uebergabestellen, und

Fig. 5   einen zur Vorrichtung nach Fig. 2 zugehörigen Grundriss der Uebergabestellen in sechs Phasen.

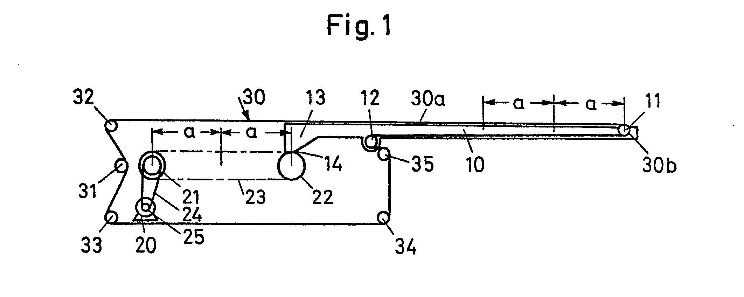

Im Prinzipschema nach Fig. 1 ist ein über Umlenkwalzen 32, 33, 34, 35, 11 und 12 geführtes Transportband mit einer Spannwalze 31 in bekannter Weise als Förderband 30 zum Transport von Gegenständen G eingerichtet. Der Antrieb kann an jeder der Umlenkwalzen 32 - 35 angreifen, um das Förderband 30 in Fig. 1 bezüglich des oberen Trums 30a von links nach rechts zu bewegen.

Die Umlenkwalze 11 am stromabwärtigen Ende 30b des Förderweges ist an einem horizontalverschieblich geführten Schlitten 10 befestigt. Eine weitere Umlenkwalze 12 ist im Abstand von dieser am stromabwärtigen Ende vorhandenen Umlenkwalze 11 am Schlitten 10 drehbar gehaltert. Mit dieser Umlenkwalze 12 und der oben genannten Umlenkwalze 35 wird bei einer Verschiebung des Schlittens 10 nach links in Fig. 1 eine Schleife gebildet, mit der die durch die Verkürzung des Transportweges bewirkte Verkürzung des oberen Trums ausgeglichen wird, so dass das Förderband 30 immer die gleiche Länge bei gleichbleibender Spannung aufweist.

Ein starr mit dem Schlitten 10 verbundener Winkelarm 13 ist bei einer Stelle 14 an einer über zwei Rollen 21, 22 geführten Transportkette 23 befestigt. Von diesen beiden Rollen 21, 22 sei beispielsweise die Rolle 21 über einen Treibriemen 24 mit der Riemenscheibe 25 eines Antriebsmotors 20 verbunden.

Der Abstand zwischen den beiden Rollen 21, 22 kann genau gleich gross gemacht werden, wie der Verschiebeweg des Schlittens 10, so dass der Antriebsmotor 20 nur in einer Drehrichtung zu betreiben ist, aber ebensogut kann der Abstand mit der Bedingung, dass der Antriebsmotor 20 reversierbar ist, grösser sein. Wenn die Verschiebung des Schlittens 10 entgegen der Förderrichtung mit dem Förderband 30 mit einer grösseren Geschwindigkeit als die Fördergeschwindigkeit auf dem oberen Trum 30a erfolgt, fallen die Gegenstände infolge des Beharrungsvermögens senkrecht nach unten. Dadurch kann die Stelle auf der Unterlage oder auf einem zweiten Förderband ortsgenau bestimmt werden. Eine dazu genügende Beschleunigung und ortsgenaue Abbremsung kann mit einem Asynchronmotor im Bremsbetrieb erhalten werden.

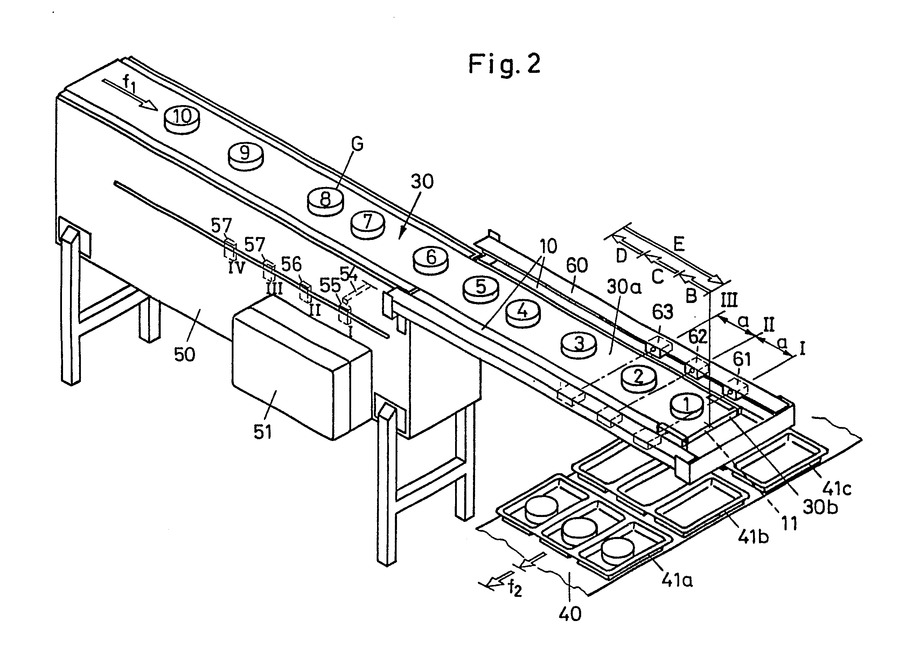

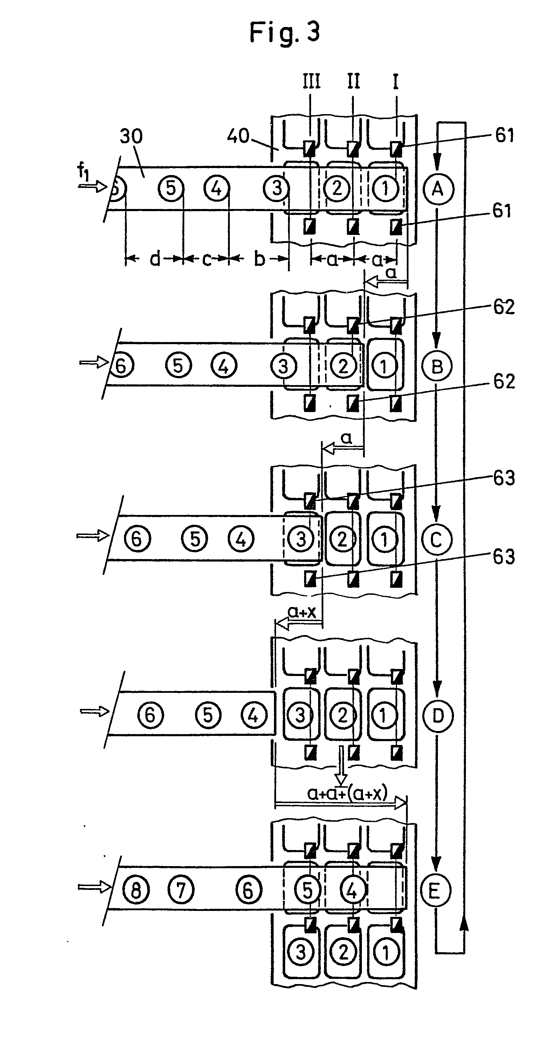

Ein erstes Anwendungsbeispiel wird nachfolgend anhand der Fig. 2 und 3 beschrieben:

Von einem Förderband 30 ist lediglich ein Bereich im Gebiet des stromabwärtigen Endes 30b dargestellt. Dieses Ende 30b ist, wie oben beschrieben, durch die Umlenkwalze 11 an einem Schlitten 10 bestimmt. Unterhalb dieses Endes 30b befindet sich der obere Trum 40 eines zweiten Fördermittels 40, auf dem z.B. Schalengruppen 41a, 41b, 41c angeordnet sind. Diese Schalengruppen 41a, 41b, 41c bestehen je aus drei die Breite des Förderbandes 40 überdeckenden Einzelschalen, in die je ein Gegenstand G, beispielsweise eine Pastete aus gemahlenem Fleisch, auch "Hamburger" genannt, abgelegt werden soll.

Diese Pasteten können entweder in plastischem Zustand, also roh auf die Schalen gelegt werden, oder in Schnellimbissstätten in gebackenem Zustand. In beiden Fällen müssen die Pasteten sorgfältig behandelt und ortsgenau abgelegt werden. Im letztgenannten Fall ist dies besonders wichtig, weil noch Beigaben dazukommen, die ebenfalls automatisch abgegeben werden.

In einem Kasten 50 unterhalb des Förderbandes 30 befindet sich der Antriebsmotor 20 und die Antriebskette 23 für den Schlitten 10. Wie dargestellt, besitzt der Schlitten 10 einen Schalthebel 54, um Kontakte 55, 56, 57, 58 zu betätigen, die gemäss der Beschreibung weiter unten in einem Steuerkasten 51 bestimmte Schaltvorgänge auslösen können. Der Schlitten 10 ist in einem Rahmen 60 in bekannter Weise geführt. Der Rahmen 60 trägt über dem stromabwärtigen Ende 30b des Förderbandes 30 beispielsweise drei Sensoren 61, 62, 63, die auf induktive oder kapazitive Feldänderungen durch einen Gegenstand G ansprechen und ein Signal erzeugen. Auch könnte ein Lichtstrahler und ein Lichtempfänger in bekannter Weise vorgesehen sein. Die Abstände zwischen den Sensoren 61, 62 und 62, 63 sind mit a bezeichnet und die Stellen, an denen die Sensoren angeordnet sind, tragen die römischen Zahlen I, II und III.

Die oben genannten Kontakte 55, 56, 57, 58 sind auch an Stellen mit entsprechenden römischen Zahlen I, II, III und IV angeordnet. Wenn sich der Schlitten 10 in ganz vorgezogener Stellung befindet, wird der Kontakt 55 betätigt, damit kann der Sensor 61 aktiviert werden. Wenn dieser das Vorhandensein eines ersten Gegenstandes 1 feststellt, wird der Antriebsmotor 20 eingeschaltet und der Schlitten 10 wird zurückgezogen, bis der Schalthebel 54 den Kontakt 56 betätigt. Damit wird der Motor gebremst und der Sensor 62 wird aktiviert. Diese beiden ersten Stellungen entsprechen den Anordnungen A und B in Fig. 3, d.h. in der Anordnung A ist der Sensor 61 aktiviert, und durch den ersten Gegenstand 1 wird der Motor 20 eingeschaltet, wodurch der Schlitten 10 in die Stellung II verfahren wird und der Gegenstand 1 fällt in die äusserste Schale der Gruppe 41b in Fig. 2.

In der Anordnung B in Fig. 3 befindet sich ein zweiter Gegenstand 2 unterhalb dem Sensor 62 und durch Betätigung des Motors 20 wird der Schlitten 10 in die Stellung III gebracht. Der Gegenstand 2 fällt in die mittlere Schale der Gruppe 41b.

In der Anordnung C ist der dritte Sensor 63 aktiviert, um den dritten Gegenstand 3 zu erkennen. Der durch denselben Vorgang in die innerste Schale der Gruppe 41b abgelegt wird. Der Schlitten befindet sich nun in Stellung IV und der Schalthebel 54 betätigt den Kontakt 58, wodurch der Schlitten 10 von der Anordnung D in die Anordnung E, die der Anordnung A entspricht, verschoben wird, um die nächstfolgenden drei Gegenstände 6, 7, 8 gleicherweise in die Schalengruppe 41c abzulegen.

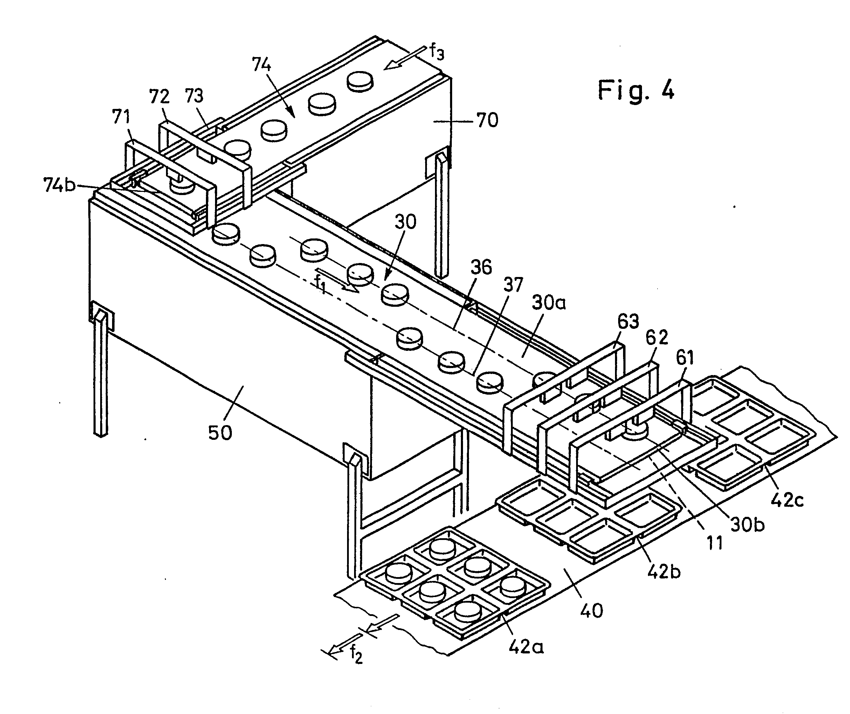

Fig. 4 zeigt ein weiteres Anwendungsbeispiel. Zur Vereinfachung der Beschreibung wurden gleiche Teile mit gleichen Bezugszahlen bezeichnet und zum Teil wurden auch Einrichtungen wie Schalthebel 54, Kontakte 55 - 58 und Steuerkasten 51 nicht mehr dargestellt. Gegenüber Fig. 2 ist noch eine weitere Förderanlage mit einem Förderband 74 vorhanden. Der Kasten 70 beinhaltet wieder den Antrieb für einen Schlitten 73 und eine Steueranordnung zur Aktivierung von zwei Sensoren 71, 72 für die Steuerung des Schlittens 73 und damit zur Verschiebung des stromabwärtigen Endes 74b des Förderbandes 74.

Wie die Anordnung der Gegenstände auf dem nachfolgenden Förderband 30 zeigt, werden immer drei Gegenstände auf einer ersten Achse 36 und die nachfolgenden drei Gegenstände auf einer seitlich um einen festgelegten Betrag verschobenen Achse 37 abgelegt. Damit können Gegenstände in rascherem Zyklus in Schalen, die in doppelreihigen Gruppen 42a, 42b, 42c angeordnet sind, abgelegt werden.

Mit den Sensoren 71, 72 wird der Schlitten 73 zuerst periodisch unter dem ersten Sensor 71 weggezogen und anschliessend wieder nach vorn bewegt, um dann in gleicher Weise unter dem zweiten Sensor 72 weggezogen und vorbewegt zu werden, wie durch Pfeile $A_1$, $A_2$, $A_3$ und $B_1$, $B_2$, $B_3$ dargestellt ist. Die Gegenstände fallen dadurch genau ausgerichtet auf den oberen Trum 30a des unteren Förderbandes 30.

In ähnlicher Weise wie im vorbeschriebenen Beispiel werden die Gegenstände G durch Sensoren 61, 62 und 63 geortet und damit der Schlitten 10 schrittweise auf dem Rahmen 60 zurückbewegt.

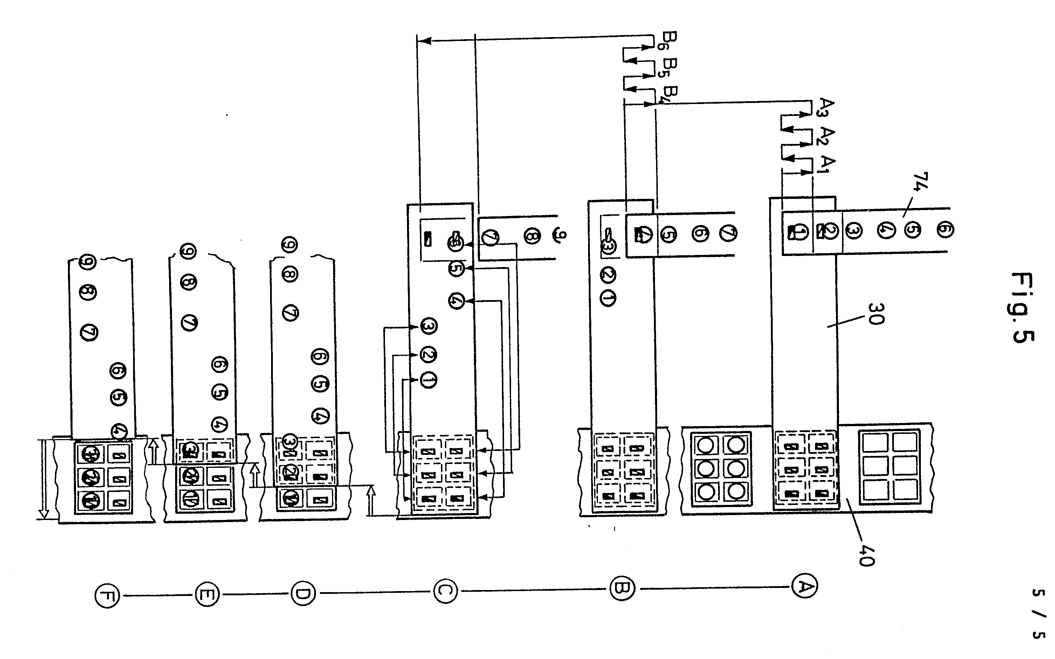

Fig. 5 zeigt deutlich die sechs Phasen A - F, die es braucht, einerseits um die Gegenstände auf den zwei Achsen 36, 37 auf dem Förderband 30 abzulegen, nämlich die beiden Phasen A und B und dann die aus dem ersten Beispiel bekannten Phasen D - F für die ersten Gegenstände 1 - 3 und dieselben wiederholten Phasen D - F für die Gegenstände 4 - 6.

P a t e n t a n s p r ü c h e

1. Vorrichtung zum ortsgenauen Ablegen von Gegenständen, insbesondere in Behälter, wie Schalen oder Kartons von Verpackungs- oder Abfüllmaschinen insbesondere aus plastisch
verformbarem Material, nämlich Pasteten aus gemahlenem
Fleisch oder einzelne oder geschichtete Tranchen aus formstabilem Material, die von einem translatorischen ersten
Fördermittel auf ein zweites Fördermittel übergeben werden
und das stromabwärtige Ende des ersten Fördermittels schrittweise entgegen der Förderrichtung verschoben und nach
Beendigung jeweils einer Uebergabephase in einem Zug zur
Anfangsstellung zurückgeführt wird und das zweite Fördermittel nach Beendigung des letzten Schrittes der Uebergabephase um eine Aufnahmestellung vorverschoben wird, dadurch
gekennzeichnet, dass das erste Fördermittel als Förderband
(30) ausgebildet ist, von dem der obere Trum (30a) wenigstens einer Partie beim stromabwärtigen Ende (30b) auf
einem verschiebbaren Schlitten (10) verläuft, an welchem
Schlitten (10) ausser der stromabwärtigen Umlenkwalze (11)
des Förderbandes (30) noch eine zweite Walze (12) gehaltert
ist, welche zweite Walze (12) die Aufgabe zu erfüllen hat,
das Förderband (30) bei der schrittweisen Verkürzung des
Förderweges durch Bildung einer Scheife gespannt zu halten.

2. Vorrichtung nach Patentanspruch 1, dadurch gekennzeichnet, dass der Antrieb (20-23) des Schlittens (10) mit einem umlaufenden Antriebsmittel (23), das einen geraden Weg von der Länge der gesamten Verkürzung des Förderweges aufweist, erfolgt, und das durch einen Bremsmotor (20) angetrieben ist.

3. Vorrichtung nach Patentanspruch 2, dadurch gekennzeichnet, dass die Verschiebung des Schlittens (10) mit grösserer Geschwindigkeit als die Fördergeschwindigkeit des ersten Förderbandes (30) erfolgt.

4. Vorrichtung nach einem der Ansprüche 1 bis 3, dadurch gekennzeichnet, dass die einzelnen Uebergabestellen durch Sensoren (61, 62, 63, 71, 72) zur Feststellung der Anwesenheit eines Gegenstandes (G) an einer bestimmten Stelle markiert sind.

5. Vorrichtung nach Patentanspruch 4, dadurch gekennzeichnet, dass die Sensoren (61, 62, 63) einzeln nach jeweils einer erfolgten Uebergabe aktivierbar sind.

6. Vorrichtung nach Patentanspruch 5, dadurch gekennzeichnet, dass die Aktivierung der Sensoren (61, 62, 63) durch vom Schlitten (10) betätigte Schaltermittel (55-58) bewirkt wird.

# Fig. 1

# Fig. 2

# Fig. 3

Fig. 4

Fig. 5